# EUROPEAN PATENT SPECIFICATION

(11) **EP 3 009 235 B1**
(45) Date of publication and mention of the grant of the patent: **23.05.2018**
(21) Application number: 15157271.6
(22) Date of filing: 03.03.2015
(51) Int. Cl.: B25B 21/00, B25B 21/02, H02P 6/15

(54) **Rotary impact tool**
Rotierendes Schlagwerkzeug
Outil d'impact rotatif

(30) Priority: 12.09.2014 JP 2014185804
(43) Date of publication of application: 20.04.2016
(73) Proprietor: Panasonic Intellectual Property Management Co., Ltd., Osaka-shi, Osaka 540-6207 (JP)
(72) Inventor: Tsubakimoto, Hiroyuki, Osaka, 540-6207 (JP); Miyazaki, Hiroshi, Osaka, 540-6207 (JP); Oishi, Ryohei, Osaka, 540-6207 (JP)
(74) Representative: Appelt, Christian W.

(56) References cited:
- EP-A1- 2 439 021
- EP-A2- 2 760 124
- WO-A1-2011/099487
- US-A1- 2012 073 846

## Description

The present invention relates to a rotary impact tool according to the preamble of claim 1. A conventional rotary impact tool in which a main hammer and a sub-hammer strike an anvil in a rotating direction to fasten a bolt or a nut is known (for example, see Japanese Patent No. 4457170). The rotary impact tool of Japanese Patent No. 4457170 suppresses so-called misalignment rotation in which an axis of rotation of the sub-hammer from a central axis of rotation of a spindle. In this manner, a rotational striking force obtained by the hammer is suppressed from being reduced while vibration in the axial direction is moderated.

The conventional rotary impact tool includes a brush motor used to rotate the hammer. However, when the input voltage is raised to increase the output of the rotary impact tool, the arc current becomes large. This increases wear in the brush of the brush motor and shortens the motor life.

EP 2 439 021 A1 describes an impact tool according to the preamble of claim 1 that can mitigate vibrations in the axial direction without reducing the rotary impact force of hammers. The hammers are composed of a primary hammer fitted to the outer circumference of a spindle and a cylindrical secondary hammer that is disposed so as to cover the primary hammer and that rotates together with the primary hammer. Furthermore, the secondary hammer is held by a axis holding means in a state in which the rotational axis of the secondary hammer is coincident with the axis of the spindle in order to prevent precession movement. With the use of the hammer configuration of the present invention, the mass of the primary hammer can be decreased compared to that of the secondary hammer, and therefore it is possible to mitigate vibrations in the axial direction while maintaining the rotary impact force.

EP 2 760 124 A2 describes a power tool including a brushless motor, a battery voltage detection unit configured to detect a voltage of a battery that provides energy for driving the brushless motor, a rotational position detection unit configured to detect a rotational position of the brushless motor, and a control unit configured to control a drive output supplied to the brushless motor based at least in part on a signal from the rotational position detection unit. The control unit controls a current conduction angle and/or an advance angle supplied to the brushless motor so that, during control of the drive output to the brushless motor, a rotational speed or a conducting current of the brushless motor approaches or reaches a target value, the target value being based at least in part on a battery voltage detected by the battery voltage detection unit.

It is an object of the present invention to provide a rotation tool that prolongs the life of the motor.

The invention relates to a rotary impact tool according to claim 1. Preferred embodiments are described in dependent claims 2 to 4. One aspect of the present disclosure is a rotary impact tool that includes a spindle including a rotary axis, an anvil arranged coaxially with the rotary axis in front of the spindle, a main hammer directly or indirectly coupled to the spindle, wherein the main hammer is rotatable about the rotary axis and movable in the axial direction, and the main hammer is configured to engage and strike the anvil to rotate the anvil, a sub-hammer that accommodates at least a portion of the main hammer and at least a portion of the spindle, wherein the sub-hammer rotates integrally with the main hammer, and a brushless motor that rotates the spindle.

Other aspects and advantages of the present invention will become apparent from the following description, taken in conjunction with the accompanying drawings, illustrating by way of example the invention.

The invention, together with objects and advantages thereof, may best be understood by reference to the following description of the presently preferred embodiments together with the accompanying drawings in which:
Fig. 1 is a partially cross-sectional view of a rotary impact tool according to an embodiment;
Fig. 2 is an exploded perspective view of a portion illustrated in Fig. 1;
Fig. 3 is a perspective view illustrating an engagement portion located between a main hammer and a sub-hammer that are illustrated in Fig. 1;
Fig. 4 is a cross-sectional view illustrating the engagement portion located between the main hammer and the sub-hammer;
Figs. 5A and 5B are plan views in which the outer circumferential surface of the spindle and the inner circumferential surface of the main hammer, which are illustrated in Fig. 1, are spread out in a circumferential direction;
Figs. 6A to 6C are schematic diagrams in which the outer circumferential surfaces of the main hammer and an anvil are spread out in the circumferential direction;
Fig. 7 is a block diagram of the rotary impact tool illustrated in Fig. 1;
Fig. 8 is a block diagram of a drive circuit in the rotary impact tool illustrated in Fig. 1;
Figs. 9A and 9B are diagrams illustrating signals provided to switching elements in accordance with mode; and
Fig. 10 is a timing chart illustrating an overlap conduction angle control of a brushless motor.

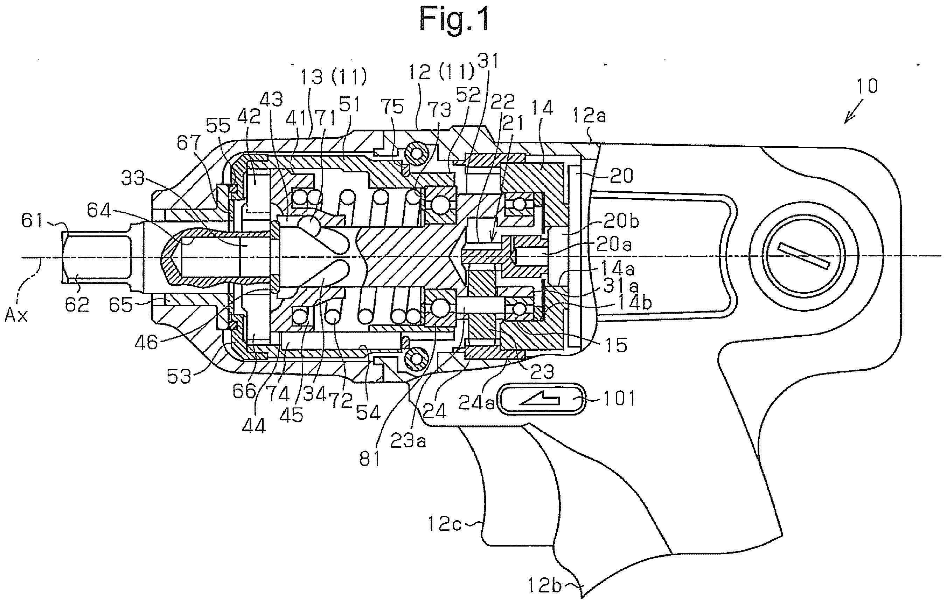

An embodiment of a rotary impact tool will be described below with reference to the accompanying drawings. As illustrated in Fig. 1, a rotary impact tool 10 is used as, for example, an impact wrench, and includes a brushless motor 20 and a power transmitting mechanism 21 that are stored in a housing 11.

The housing 11 is configured of a rear housing 12 which is arranged at the rear end of the rotary impact tool 10 and may be made of a synthetic resin and a front housing 13 which is arranged at the front end of the rotary impact tool 10 and may be made of aluminum.

The rear housing 12 includes a cylindrical storing unit 12a and a grip portion 12b extending downward from the storing unit 12a to form a substantially T shape. A trigger switch 12c that can be press-controlled with a user is arranged on the grip portion 12b. At the lower end of the grip portion 12b, a battery (not illustrated) serving as a power supply of the brushless motor 20 is arranged.

The front housing 13, which may be a cylindrical shape, accommodates a spindle 31, a main hammer 41, a sub-hammer 51, and an anvil 61. A tool attaching unit 62 of the anvil 61 projects from an opening at the front end of the front housing 13. The front housing 13 is fixed to the rear housing 12 with, for example, a plurality of screws (not illustrated).

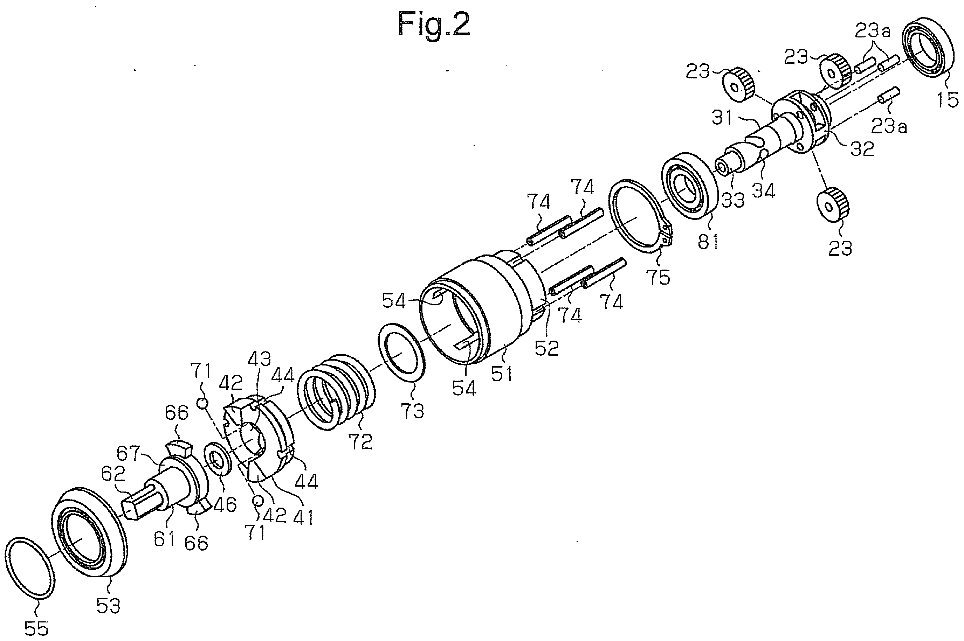

As illustrated in Figs. 1 and 2, the power transmitting mechanism 21 stored in the rear housing 12 has a sun gear 22 press-fitted on a drive shaft 20a, three planet gears 23 meshed with the sun gear 22, and a ring gear 24 meshed with the planet gear 23.

As illustrated in Fig. 2, the planet gears 23 are rotatably supported by support shafts 23a each rotatably attached to an overhang portion 32 formed at the rear of the substantially columnar spindle 31.

As illustrated in Figs. 1 and 2, the ring gear 24 is fixed on the inner surface of the cylindrical storing unit 12a. A spacer 14 is fixed to the inner surface of a rear part 24a of the ring gear 24.

As illustrated in Fig. 1, the spacer 14 is a disk having a center through hole. The center through hole includes a rear opening 14a and a front opening 14b having different diameters. A front part 20b of the brushless motor 20 is fitted in the rear opening 14a on a rear side of the spacer 14. This supports the brushless motor 20. A bearing 15 is fitted in the front opening 14b of the front side of the spacer 14. The spindle 31 is rotatably supported in the bearing 15.

The power transmitting mechanism 21 decelerates the rotation of the brushless motor 20 in a ratio of the number of teeth of the sun gear 22 to the number of teeth of the ring gear 24 and increases the torque to drive the spindle 31 at a low speed and a high torque.

As illustrated in Fig. 1, a rear end 31a of the spindle 31, which is formed at the rear of the overhang portion 32, is journaled by the bearing 15.

As illustrated in Fig. 2, the overhang portion 32 of the spindle 31 is formed by two ring-like flanges that are arranged in front of the bearing 15 and are separated by a predetermined interval to form a gap therebetween. The three planet gears 23 are arranged between the two flanges of the overhang portion 32 and rotatably supported on the support shaft 23a.

A substantially columnar projecting portion 33 is formed to extend in front of the overhang portion 32 of the spindle 31. The projecting portion 33 is fitted in an engagement hole 64 formed at the rear of the anvil 61.

The main hammer 41, which may be a steel disk having a center through hole, is fitted on the outer periphery of the spindle 31. The main hammer 41 includes a pair of axial projections 42 projecting from the front end of the main hammer 41 toward the anvil 61. The main hammer 41 is rotatable about a rotary axis Ax and is axially movable.

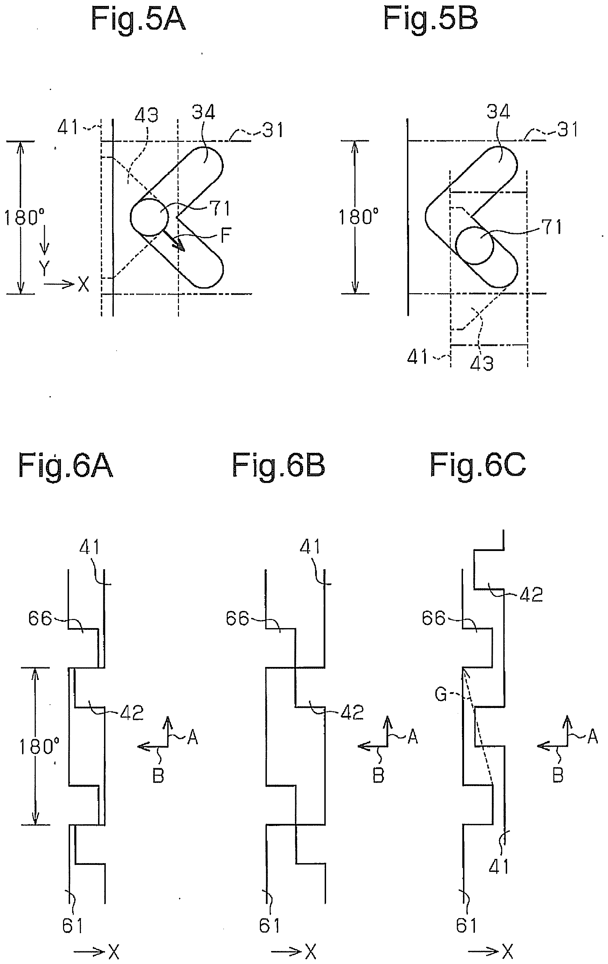

A rotational striking mechanism of the rotary impact tool 10 includes the spindle 31, the main hammer 41, the sub-hammer 51, and the anvil 61. The rotational striking mechanism may further i'nclude two first cam grooves 34 formed in the outer circumferential surface of the spindle 31, two second cam grooves 43 formed in the inner circumferential surface of the through hole of the main hammer 41, two steel balls 71 sandwiched between the first cam grooves 34 and the second cam grooves 43, and a spring 72 biasing the main hammer 41 toward the anvil 61. An operation of the rotational striking mechanism will be described below with reference to Figs. 5A to 6C.

As illustrated in Fig. 1, the sub-hammer 51 includes a cylindrical tube surrounding the main hammer 41. The sub-hammer 51 may be a steel tubular member. In an embodiment, the sub-hammer 51 partially accommodates the main hammer 41. The sub-hammer 51 may entirely accommodate the main hammer 41. The sub-hammer 51 rotates integrally with the main hammer 41.

The sub-hammer 51 includes a small-diameter step 52 having a reduced outer diameter on the rear-end side of the sub-hammer 51. A rear-end inner periphery of the small-diameter step 52 is press-fitted in an outer ring of a rolling bearing 81. A ring-like cover 53 is fixed on the front-end side of the sub-hammer 51.

An integrally rotating mechanism, which is configured to rotate the sub-hammer 51 integrally with the main hammer 41, is formed between the outer circumferential surface of the main hammer 41 and the inner circumferential surface of the sub-hammer 51.

As illustrated in Fig. 2, the integrally rotating mechanism includes at least one (for example, four) first groove 44 formed on the outer circumferential surface of the main hammer 41 and at least one (for example, four) second groove 54 formed on the inner circumferential surface of the cylindrical tube of the sub-hammer 51. Each of the first groove 44 and the second groove 54 has a semi-circular cross section and is formed in parallel with the rotary axis Ax of the spindle 31. The first groove 44 and the second groove 54 are configured to form a circular hole in collaboration with each other.

From a rear end side of the sub-hammer 51, an engagement element 74 is fitted in the hole formed by the first groove 44 and the second groove 54. The engagement element 74 is a long member and has, for example, a substantially columnar shape.

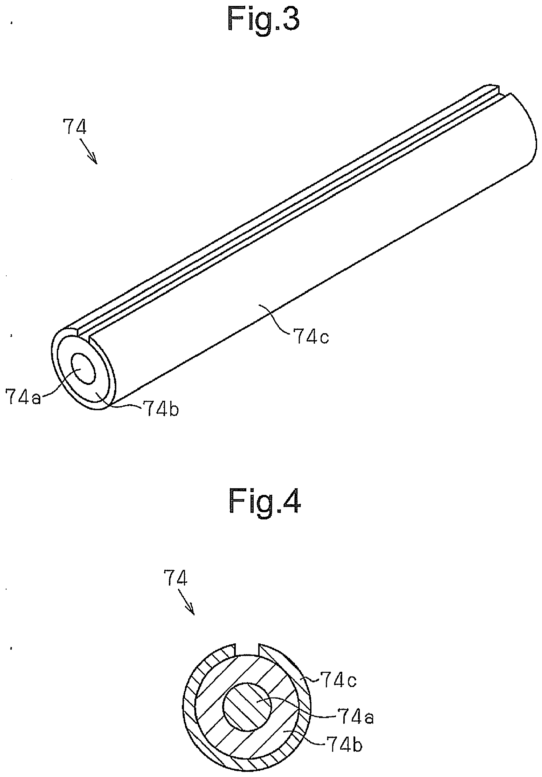

As illustrated in Figs. 3 and 4, the engagement element 74 includes a columnar pin 74a serving as a core material, a cylindrical inner cover 74b covering the outer periphery of the pin 74a, and an outer cover 74c covering the outer periphery of the inner cover 74b. The pin 74a is made of a metal material having relatively high rigidity. The inner cover 74b is an elastic member made of an elastic material such as elastomer. The outer cover 74c is configured of a metal member. The outer cover 74c is configured to have a substantially C-shaped cross section. For this reason, the outer cover 74c has elasticity in a radial direction. The pin 74a is an example of a long rigid core, the inner cover 74b is an example of a first cushion sleeve, and the outer cover 74c is an example of a second cushion sleeve.

A C-shaped cover ring 75 having a locking function of the engagement element 74 is mounted on the small-diameter step 52 on the rear-end-side outer periphery of the sub-hammer 51. This suppresses the engagement element 74 from improperly dropping out during the assembling operation of the rotary impact tool 10 and makes the assembling operation easy.

The engagement element 74 is fitted in the hole formed by the first groove 44 of the main hammer 41 and the second groove 54 of the sub-hammer 51 to make it possible to integrally rotate the main hammer 41 and the sub-hammer 51 about the rotary axis Ax.

The main hammer 41 is movable in a longitudinal direction by using the engagement element 74 as a guide. In Fig. 1, the engagement element 74 and the grooves 44 and 54 are illustrated in the lower half, and are not illustrated in the upper half.

The spring 72 and a washer 73 are interposed between an annular recessed portion 45 formed on a rear side of the main hammer 41 and the outer ring of the rolling bearing 81. The spring 72 biases the main hammer 41 toward the anvil 61.

The hammers 41 and 51 and the spring 72 integrally rotate about the rotary axis Ax. The spring 72 has helixes that are equal in outer diameter, so that the front end, the rear end, and the middle of the spring 72 all integrally rotate. This structure does not require a torsion-preventing washer and a ball, which are required when the rear end of the spring 72 is received by the spindle 31. Therefore the configuration of the rotational striking mechanism is simplified.

As illustrated in Fig. 1, the anvil 61, whhch may be made of steel, is rotatably supported on the front housing 13 through a sliding bearing 65 which may be made of steel or brass.

The tool attaching unit 62, which may have a square cross section to attach a socket body for fastening the head of a hexagon bolt or a hexagon nut, is arranged at the front end of the anvil 61.

One pair of radial projections 66 are formed at the rear of the anvil 61 to engage with the axial projections 42 of the main hammer 41.

As illustrated in Fig. 2, each of the radial projections 66 is formed in a fan-like shape and has an outer circumferential surface that is in contact with the inner circumferential surface of the front end of the cylindrical tube of the sub-hammer 51. The pair of radial projections 66 of the anvil 61 has a function of holding a center of rotation when the sub-hammer 51 rotates.

The radial projections 66 of the anvil 61 and the axial projections 42 of the main hammer 41 may not be paired (two). When the numbers of the projections 42, 66 are equal to each other, the anvil 61 and the main hammer 41 each may have three or more projections arranged at equal angular interval.

On the anvil 61, a ring-like flange 67 is formed to be in contact with the pair of radial projections 66. On the outer side of the flange 67, the ring-like cover 53 is disposed to cover the front open end of the cylindrical tube of the sub-hammer 51. An O ring 55 may be disposed between the cover 53 and the sliding bearing 65 to prevent a gap from being formed between the cover 53 and the sub-hammer 51.

An operation of the rotary impact tool 10 according to the embodiment will be described below.

When the brushless motor 20 rotates, the rotation is decelerated by the power transmitting mechanism 21 and transmitted to the spindle 31 to rotate the spindle 31 at a predetermined rotating speed. A rotating force of the spindle 31 is transmitted to the main hammer 41 through the steel balls 71 fitted between the first cam grooves 34 of the spindle 31 and the second cam grooves 43 of the main hammer 41.

Fig. 5A illustrates a positional relationship between the first cam grooves 34 and the second cam grooves 43 immediately after fastening a bolt or a nut is started. Fig. 6A illustrates an engagement state between the axial projections 42 of the main hammer 41 and the radial projections 66 of the anvil 61 at the same point of time.

As illustrated in Figs. 6A to 6C, with rotation of the brushless motor 20 (see Fig. 1), a rotating force A is applied to the main hammer 41 in a direction indicated by an arrow. The spring 72 applies a biasing force B in a straight forward direction to the main hammer 41 in a direction indicated by an arrow. There is some gap between the main hammer 41 and the anvil 61, and the gap is formed by a buffer member 46.

When the main hammer 41 rotates, the anvil 61 is rotated with engagement between the axial projections 42 of the main hammer 41 and the radial projections 66 of the anvil 61, and the rotating force of the main hammer 41 is transmitted to the anvil 61. With the rotation of the anvil 61, the socket body (not illustrated) attached to the tool attaching unit 62 of the anvil 61 rotates to give a rotating force to the bolt or the nut, so that initial fastening is performed.

When a load torque applied to the anvil 61 increases with the progress of the fastening of the bolt or the nut, as illustrated in Fig. 5A, the main hammer 41 is rotated by the torque in a Y direction relative to the spindle 31.

While the steel balls 71 move along inclined surfaces of the first cam grooves 34 and the second cam grooves 43 in a direction indicated by an arrow F against the biasing force B of the spring 72, the main hammer 41 moves in an X direction.

As illustrated in Fig. 5B, when the steel balls 71 move along the inclined surfaces of the first cam grooves 34 and the second cam grooves 43, in response to this, the main hammer 41 moves in the X direction. At this time, as illustrated in Fig. 6B, the axial projections 42 of the main hammer 41 are disengaged from the radial projections 66 of the anvil 61.

When the axial projections 42 of the main hammer 41 are disengaged from the radial projections 66 of the anvil 61 to release the biasing force B of the compressed spring 72, the main hammer 41 advances at a high speed in a direction opposite to the X direction while rotating in a direction opposite to the Y direction.

As illustrated in Fig. 6C, the axial projections 42 of the main hammer 41 move along a track indicated by an arrow G to collide with the radial projections 66 of the anvil 61 so as to give a rotational striking force to the anvil 61. Thereafter, with the counteraction, the axial projections 42 of the main hammer 41 move in a direction opposite to the direction of the track G. However, finally, the rotating force A and the biasing force B act to return the state of the axial projections 42 to the state illustrated in Fig. 6A.

The operations are repeated to repeatedly perform the rotational striking to the anvil 61.

The operation executed when the bolt or the nut is fastened has been described above. However, at the time of loosening a fastened bolt or nut, almost the same operations as those performed in fastening are performed by the rotational striking mechanism. In this case, the brushless motor 20 is rotated in a direction opposite to the direction in fastening to cause the steel balls 71 to move in an upper right direction along the first cam grooves 34 illustrated in Fig. 6A, and the axial projections 42 of the main hammer 41 strike the radial projections 66 of the anvil 61 in the direction opposite to the direction in fastening.

An operation of the sub-hammer 51 in rotational striking will be described below in comparison with a rotary impact tool having only a main hammer.

When the axial projections 42 of the main hammer 41 are disengaged from the radial projections 66 of the anvil 61, the spring 72 is released from a compressed state, and energy accumulated in the spring 72 is discharged as kinetic energies of the main hammer 41 and the sub-hammer 51.

With the operations of the first cam grooves 34, the second cam grooves 43, and the steel balls 71, as indicated by the track G in Fig. 6C, the main hammer 41 advances while rotating at a high speed.

The axial projections 42 of the main hammer 41 collide with the radial projections 66 of the anvil 61 to give rotational impact to the anvil 61. The front end surface of the main hammer 41 collides with the rear end surface of the anvil 61 to give impact in an axial direction.

Striking the anvil 61 by the main hammer 41 is performed, for example, about 40 times per second. With the impact given, vibrations occur in a direction orthogonal to the rotary axis Ax of the spindle 31 and the axial direction of the spindle 31.

Since these vibrations fatigue an operator to deteriorate operating efficiency and to numb his/her hand, the vibrations are preferably reduced as much as possible. Of the vibrations, a vibration in the axial direction of the spindle 31 is generated mainly by impact given in the axial direction by the main hammer 41. On the other hand, impact given in the axial direction by the main hammer 41 does not contribute to fastening a bolt or a nut. An intensity of impact in the axial direction by a hammer is in proportion to the mass of the hammer, and an intensity of rotational impact is in proportion to the moment of inertia (total sum of products of the masses of parts in an object and the squares of distances from the parts to a rotating axis).

When a rotational striking is performed to the anvil 61 by using one hammer, the mass of the hammer needs to be reduced to reduce impact in the axial direction. However, since the moment of inertia decreases when the mass of the hammer is simply reduced, the rotational impact also decreases to weaken the rotational striking force of the anvil 61.

To address the above problems, the rotary impact tool 10 according to the embodiment includes the sub-hammer 51 which is separated from the main hammer 41 fitted on the spindle 31. The'sub-hammer 51 rotates integrally with the main hammer 41 but does not move in the axial direction of the spindle 31.

For example, the total mass of the main hammer 41 and the sub-hammer 51 is set almost equal to the mass obtained in the case where only one hammer is used, and the mass of the sub-hammer 51 is set to be greater than the mass of the main hammer 41.

In the hammer configuration described above, impact strength applied in the rotating direction of the anvil 61 and caused by releasing the spring 72 from the compressed state is in proportion to the moments of inertia of the hammers, i.e., a sum of the moments of inertia of the main hammer 41 and the sub-hammer 51. On the other hand, the impact strength applied in the axial direction by the main hammer 41 and the sub-hammer 51 is in proportion to the mass of only the main hammer 41. Thus, mass of the sub-hammer 51 contributing only to the rotational impact strength is made larger than the mass of the main hammer 41 as much as possible to make it possible to reduce the impact strength applied in the axial direction by the main hammer 41.

Furthermore, in the embodiment, by using the fact that the magnitude of a moment of inertia is in proportion to the square of a radius of rotation, the moment of inertia is increased. For example, since most of the mass of the sub-hammer 51 having the cylindrical tube is concentrated on a large-radius part, a moment of inertia is larger than that obtained when a columnar sub-hammer having its mass concentrated on a center of rotation is employed, and an impact strength generated by the sub-hammer increases.

Thus, when the hammers (the main hammer 41 and the sub-hammer 51) according to the embodiment, the rotary impact tool 10 in which an impact strength applied in the rotating direction of the anvil 61 is large and a vibration generated in the axial direction of the spindle 31 is small can be achieved.

The electrical configuration of the rotary impact tool 10 will now be described.

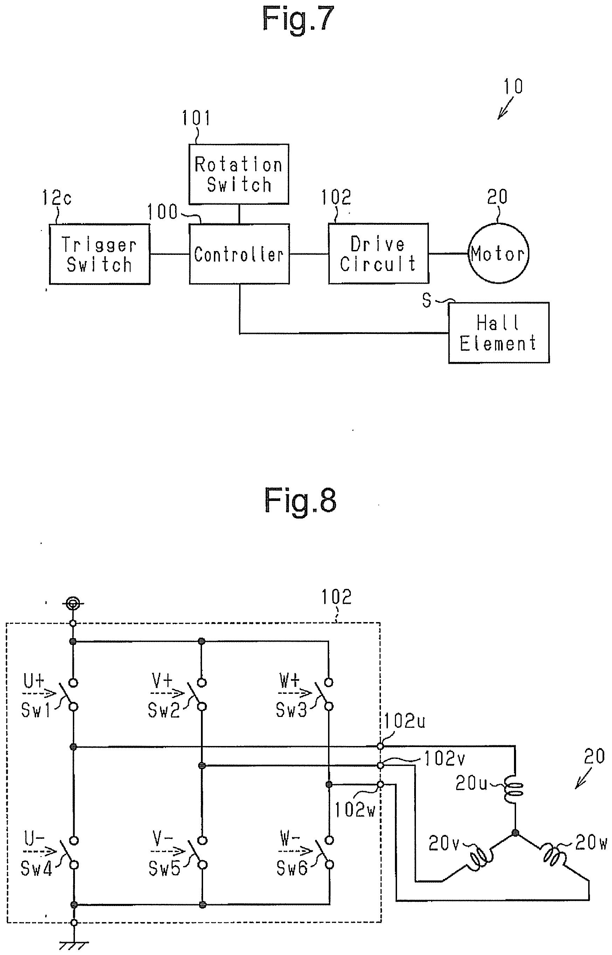

Referring to Fig. 7, a rotary impact tool 10 includes a controller 100 (control circuit) that is electrically connected to a rotation switch 101, which is used to select the rotation direction of the brushless motor 20, the trigger switch 12c, and a drive circuit 102. A rotation position detector S, which is used to detect the position or angle of the rotor of the brushless motor 20, is connected to the controller 100. It is preferred that the rotation position detector S be a Hall element.

As illustrated in Figs. 7 and 8, the drive circuit 102 is a known PWM inverter formed by connecting a plurality of switching elements Sw1 to Sw6 that correspond to the brushless motor 20.

As illustrated in Fig. 8, in the drive circuit 102, three series circuits of the switching elements Sw1 and Sw4, the switching elements Sw2 and Sw5, and the switching elements Sw3 and Sw6 are connected in parallel. The upper stage side switching elements Sw1 to Sw3 are each connected to the positive terminal of the battery. The lower stage side switching elements Sw4 to Sw6 are connected to the negative terminal of the battery. Connection points 102u, 102v, and 102w of the switching elements Sw1 to Sw6 are respectively connected to motor coils 20u, 20v, and 20w of the brushless motor 20. The switching elements Sw1 to Sw6 may be formed by, for example, FETs.

Each of the switching elements Sw1 to Sw6 is switched on and off by a motor control signal (gate on/off signal) output from the controller 100 in accordance with the rotation position of the brushless motor 20 sent from the rotation position detector S. In response to the motor control signal, the switching elements Sw1 to Sw6 change the duty ratio, which is the on/off ratio, to supply the brushless motor 20 with three-phase drive power converted from the DC voltage of the battery.

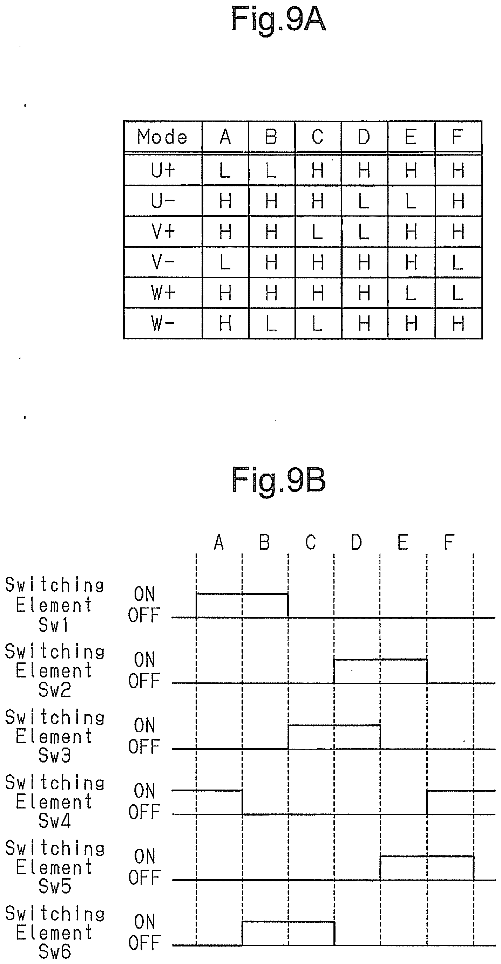

In the present embodiment, when generating rotation with the brushless motor 20, the controller 100 of the rotary impact tool 10 provides each of the switching elements Sw1 to Sw6 with a motor control signal corresponding to modes A to F illustrated in Fig. 9A. This switches the switching elements Sw1 to Sw6 on and off as illustrated in Fig. 9B. When driving the brushless motor 20, the controller 100 executes commutation control to provide a motor control signal in accordance with each mode to each of terminals U+, U-, V+, V-, W+, and W- connected to the gates of the switching elements Sw1 to Sw6, which are formed by FETs. The motor control signal undergoes PWM control to control the current flowing to each of the motor coils 20u, 20v, and 20w and control the rotation speed of the brushless motor 20. Modes A to F are selected in accordance with the sensor signal from the rotation position detector S.

The motor control of the rotary impact tool 10 in the present embodiment will now be described.

In the rotary impact tool 10 of the present embodiment, the controller 100 controls the switching elements Sw1 to Sw6 of the drive circuit 102. For example, when voltage having the same phase as the induced voltage is applied to the brushless motor 20, inductance components of the motor coils 20u, 20v, and 20w retard the phase of the coil current flowing through the motor coils 20u, 20v, and 20w. To compensate for the retardation, for example, the controller 100 is configured to advance the phase of the applied voltage in accordance with the induced voltage at the motor coils 20u, 20v, and 20w so that the phase of the coil current flowing through the motor coils 20u, 20v, and 20w advances and conforms to the phase of the induced voltage. The angle advancement control increases the output of the brushless motor 20.

The advantages of the embodiment will now be described.
(1) The rotary impact tool 10 includes the brushless motor 20 that rotates the spindle 31. The brushless motor 20 is not subject to brush wear that occurs in a brush motor. This prolongs the life of the brushless motor 20.
(2) The rotary impact tool 10 includes the rotation position detector S that detects the rotation position of the brushless motor 20. This ensures detection of the rotation position of the brushless motor 20 (rotor) and allows for stable operation of the brushless motor 20.
(3) The controller 100 executes angle advancement control on the brushless motor 20. This allows for an increase in the output of the brushless motor 20.

It should be apparent to those skilled in the art that the present invention may be embodied in many other specific forms without departing from the scope of the invention. Particularly, it should be understood that the present invention may be embodied in the following forms.

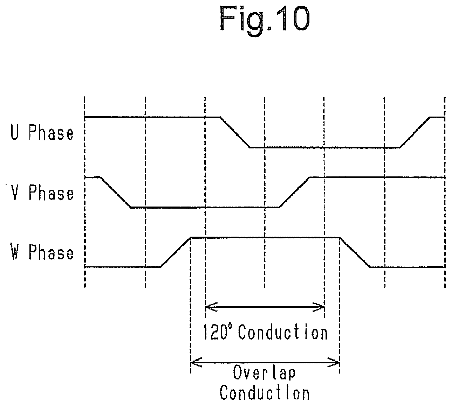

The controller 100 may execute conduction angle control (overlap conduction angle control) on the brushless motor. Fig. 10 illustrates the conduction time of the three phases (U phase, V phase, and W phase) respectively corresponding to the motor coils 20u, 20v, and 20w. In an overlap conduction angle control having a conduction period that is longer than a 120° conduction, an overlap conduction period is produced before and after commutation. This limits torque drops and further reduces vibration and noise.

The outer cover 74c of the engagement element 74 may be omitted.

As long as the outer cover 74c is elastic in the radial direction, the cross-sectional shape may be changed to one other than a C-shaped cross-section.

The present disclosure includes the embodiments described below.
Embodiment 1: A rotary impact tool (10) includes a spindle (31), an anvil (61), a main hammer (41), a sub-hammer (51), and a brushless motor (20). The spindle (31) includes a rotary axis (Ax). The anvil (61) is arranged coaxially with the rotary axis (Ax) in front of the spindle (31). The main hammer (41) is directly or indirectly coupled to the spindle (31). The main hammer (41) is rotatable about the rotary axis (Ax) and movable in the axial direction, and the main hammer is configured to engage and strike the anvil (61) to rotate the anvil (61). The sub-hammer (51) accommodates at least a portion of the main hammer (41) and at least a portion of the spindle (31). The sub-hammer (51) rotates integrally with the main hammer (41). The brushless motor (20) rotates the spindle (31).
Embodiment 2: The rotary impact tool (10) further includes a rotation position detector (S) that detects a rotation position of the brushless motor (20).
Embodiment 3: The rotary impact tool (10) further includes a controller (100) that controls the brushless motor (20). Preferably, the controller (100) is configured to execute angle advancement control on the brushless motor (20).
Embodiment 4: The rotary impact tool (10) further includes a controller (100) that controls the brushless motor (20). Preferably, the controller (100) is configured to execute conduction angle on the brushless motor (20).
Embodiment 5: Preferably, the brushless motor (20) includes at least one motor coil (20u, 20v, 20w), and the angle advancement control advances a phase of a voltage applied to the brushless motor (20) in accordance with a phase of an induced voltage at the at least one motor coil.
Embodiment 6: Preferably, the brushless motor (20) includes at least one motor coil (20u, 20v, 20w), and the conduction angle control extends a commutation time of the motor coils to produce a commutation overlap period before and after commutation.

The above embodiments and modified examples may be appropriately combined.

The invention is not limited to the foregoing embodiments and various changes and modifications of its components may be made without departing from the scope of the present invention as defined by the claims. Also, the components disclosed in the embodiments may be assembled in any combination for embodying the present invention. For example, some of the components may be omitted from all components disclosed in the embodiments. Further, components in different embodiments may be appropriately combined. The scope of the present invention is to be understood with reference to the appended claims.

## Claims

1. A rotary impact tool (10) comprising:
a spindle (31) including a rotary axis (Ax);
an anvil (61) arranged coaxially with the rotary axis (Ax) in front of the spindle (31);
a main hammer (41) directly or indirectly coupled to the spindle (31), wherein the main hammer (41) is rotatable about the rotary axis (Ax) and movable in the axial direction, and the main hammer (41) is configured to engage and strike the anvil (61) to rotate the anvil (61);
a sub-hammer (51) that accommodates at least a portion of the main hammer (41) and at least a portion of the spindle (31), wherein the sub-hammer (51) is configured to rotate integrally with the main hammer (41); and
the rotary impact tool (10) **being characterized by**
a brushless motor (20) that is configured to rotate the spindle (31); and
wherein the sub-hammer (51) includes a cylindrical tube surrounding the main hammer (41),
and wherein the rotary impact tool (10) further comprises:
at least one first groove (44) formed on the outer circumferential surface of the main hammer (41) and at least one second groove (54) formed on the inner circumferential surface of the cylindrical tube of the sub-hammer (51),
wherein each of the first groove (44) and the second groove (54) has a semi-circular cross section and is formed in parallel with the rotary axis (Ax) of the spindle (31),
the first groove (44) and the second groove (54) are configured to form a circular hole in the collaboration with each other,
an engagement element (74) is fitted in the circular hole formed by the first groove (44) and the second groove (54),
the engagement element (74) is a long member, and
wherein the engagement element (74) includes a pin (74a) serving as a core material (74a), a cylindrical, elastic inner cover (74b), and a metal outer cover (74c),
wherein the elastic inner cover (74b) covering the outer periphery of the pin (74a), and
the metal outer cover (74c) covering the outer periphery of the inner cover (74b).

2. The rotary impact tool (10) according to claim 1, further comprising a rotation position detector (S) that detects a rotation position of the brushless motor (20).

3. The rotary impact tool (10) according to claim 1 or 2, further comprising a controller (100) that controls the brushless motor (20), wherein the controller (100) is configured to execute angle advancement control on the brushless motor (20).

4. The rotary impact tool (10) according to any one of the preceding claims, further comprising a controller (100) that controls the brushless motor (20), wherein the controller (100) is configured to execute conduction angle on the brushless motor (20).

## Patentansprüche

1. Rotierendes Schlagwerkzeug (10), aufweisend:
eine Spindel (31) mit einer Drehachse (Ax);
einen Amboss (61), der koaxial mit der Drehachse (Ax) vor der Spindel (31) angeordnet ist;
einen Haupthammer (41), der mit der Spindel (31) mittelbar oder unmittelbar verbunden ist, wobei der Haupthammer (41) um die Drehachse (Ax) drehbar ist und in der axialen Richtung beweglich ist, und wobei der Haupthammer (41) dazu eingerichtet ist, mit dem Amboss (61) in Eingriff zu kommen und darauf zu schlagen, um den Amboss (61) zu drehen;
einen Unterhammer (51), der wenigstens einen Abschnitt des Haupthammers (41) und wenigstens einen Abschnitt der Spindel (31) aufnimmt, wobei der Unterhammer (51) dazu eingerichtet ist, sich mit dem Haupthammer (41) integral zu drehen; und
wobei das rotierende Schlagwerkzeug (10) **gekennzeichnet ist durch**:
einen bürstenlosen Motor (20), der dazu eingerichtet ist, die Spindel (31) zu drehen; und
wobei der Unterhammer (51) ein zylindrisches Rohr enthält, das den Haupthammer (41) umgibt,
und wobei das rotierende Schlagwerkzeug (10) ferner aufweist:
wenigstens eine erste Nut (44), die auf der äußeren Umfangsfläche des Haupthammers (41) ausgebildet ist, und wenigstens eine zweite Nut (54), die an der Innenumfangsfläche des zylindrischen Rohrs des Unterhammers (51) ausgebildet ist,
wobei jede der ersten Nut (44) und der zweiten Nut (54) einen halbkreisförmigen Querschnitt aufweist und parallel zur der Drehachse (Ax) der Spindel (31) ausgebildet ist, wobei die erste Nut (44) und die zweite Nut (54) dazu eingerichtet sind, in dem Zusammenwirken miteinander ein rundes Loch zu bilden,
ein Eingriffselement (74), das in dem runden Loch eingepasst ist, das **durch** die erste Nut (44) und **durch** die zweite Nut (54) gebildet ist,
wobei das Eingriffselement (74) ein langes Glied ist, und
wobei das Eingriffselement (74) einen Stift (74a), der als ein Kernmaterial (74a) dient, eine zylindrische, elastische Innenabdeckung (74b) und eine metallische Außenabdeckung (74c) aufweist,
wobei die elastische Innenabdeckung (74b) den Außenumfang des Stifts (74a) bedeckt, und die metallische Außenabdeckung (74c) den Außenumfang der Innenabdeckung (74b) bedeckt.

2. Rotierendes Schlagwerkzeug (10) nach Anspruch 1, das ferner einen Drehpositionsdetektor (S) aufweist, der eine Drehposition des bürstenlosen Motors (20) erfasst.

3. Rotierendes Schlagwerkzeug (10) nach Anspruch 1 oder 2, das ferner eine Steuereinrichtung (100) aufweist, die den bürstenlosen Motor (20) steuert, wobei die Steuereinrichtung (100) dazu eingerichtet ist, eine Winkelfortschrittsteuerung an dem bürstenlosen Motor (20) auszuführen.

4. Rotierendes Schlagwerkzeug (10) nach einem der vorhergehenden Ansprüche, ferner mit einer Steuereinrichtung (100), die den bürstenlosen Motor (20) steuert, wobei die Steuereinrichtung (100) dazu eingerichtet ist, einen Stromflusswinkel an dem bürstenlosen Motor (20) umzusetzen.

## Revendications

1. Outil d'impact rotatif (10) comprenant :
une broche (31) comprenant un axe de rotation (Ax) ;
une enclume (61) agencée de manière coaxiale avec l'axe de rotation (Ax) en face de la broche (31) ;
un marteau principal (41) directement ou indirectement couplé à la broche (31), dans lequel le marteau principal (41) peut tourner autour de l'axe de rotation (Ax) et est mobile dans la direction axiale, et le marteau principal (41) est configuré pour mettre en prise et frapper l'enclume (61) pour faire tourner l'enclume (61) ;
un marteau auxiliaire (51) qui loge au moins une partie du marteau principal (41) et au moins une partie de la broche (31), dans lequel le marteau auxiliaire (51) est configuré pour tourner de manière solidaire avec le marteau principal (41) ; et
l'outil d'impact rotatif (10) étant **caractérisé par** :
un moteur sans balai (20) qui est configuré pour faire tourner la broche (31) ; et
dans lequel le marteau auxiliaire (51) comprend un tube cylindrique entourant le marteau principal (41),
et dans lequel l'outil d'impact rotatif (10) comprend en outre :
au moins une première rainure (44) formée sur la surface circonférentielle externe du marteau principal (41) et au moins une seconde rainure (54) formée sur la surface circonférentielle interne du tube cylindrique du marteau auxiliaire (51),
dans lequel chacune parmi la première rainure (44) et la seconde rainure (54) a une section transversale semi-circulaire et est formée parallèlement à l'axe de rotation (Ax) de la broche (31), la première rainure (44) et la seconde rainure (54) sont configurées pour former un trou circulaire en collaboration l'une avec l'autre,
un élément de mise en prise (74) est monté dans le trou circulaire formé par la première rainure (44) et la seconde rainure (54),
l'élément de mise en prise (74) est un élément long, et
dans lequel l'élément de mise en prise (74) comprend un axe (74a) servant de matériau de noyau (74a), un couvercle interne élastique cylindrique (74b) et un couvercle externe métallique (74c), dans lequel le couvercle interne élastique (74b) recouvrant la périphérie externe de l'axe (74a) et le couvercle externe métallique (74c) recouvrant la périphérie externe du couvercle interne (74b).

2. Outil d'impact rotatif (10) selon la revendication 1, comprenant en outre un détecteur de position de rotation (S) qui détecte une position de rotation du moteur sans balai (20) .

3. Outil d'impact rotatif (10) selon la revendication 1 ou 2, comprenant en outre un organe de commande (100) qui commande le moteur sans balai (20), dans lequel l'organe de commande (100) est configuré pour exécuter une commande d'avancement d'angle sur le moteur sans balai (20).

4. Outil d'impact rotatif (10) selon l'une quelconque des revendications précédentes, comprenant en outre un organe de commande (100) qui commande le moteur sans balai (20), dans lequel l'organe de commande (100) est configuré pour exécuter l'angle de conduction sur le moteur sans balai (20).
